# EUROPEAN PATENT APPLICATION

(11) **EP 2 173 079 A2**
(43) Date of publication of application: **07.04.2010**
(21) Application number: 09165359.2
(22) Date of filing: 13.07.2009
(51) Int. Cl.: H04L 29/06

(54) **Network authorization method and application thereof**

(30) Priority: 01.10.2008 TW 97137746
(71) Applicant: Avermedia Technologies, Inc., Chung Ho City Taipei Hsien (TW)
(72) Inventor: Hu, Jhao-Dong, Taipei Hsien (TW); Chen, Chun-Hao, Taipei Hsien (TW); Tsao, Heng-Zong, Taipei Hsien (TW)
(74) Representative: Lang, Christian

(57) **Abstract**

A network authorization method is disclosed. The network authorization method includes the following steps. After a third server receives a client account from a client, the third server generates and replies a client session ID to the client. Transmit the client session ID to the client. After the client transmits a log-in session ID to a service server, receive the log-in session ID from the service server. Compare the client session ID with the log-in session ID. When the client session ID is the same with the log-in session ID, transmit an authorized signal to the service server to make the service server allow the client to log in.

## Description

### RELATED APPLICATIONS

This application claims priority of Taiwan Application Serial Number 97137746, filed October 01, 2008, which is herein incorporated by reference.

### BACKGROUND

### Field of Invention

The present invention relates to a network authorization method and application thereof. More particularly, the present invention relates to a network authorization method and application thereof through authorizing session ID.

### Description of Related Art

In general, after logging into a website, a user acquires a service from the website. Furthermore, after inputting an account and password to log into the website, the user acquires a service from the website. However, if the login mechanism of the website was compromised, the service that is provided by the website is acquired by any unauthorized user.

For the forgoing reasons, there is a need for a network authorization method to prevent that the login mechanism and the services are provided by the same server.

### SUMMARY

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

In one or more aspects, the present disclosure is directed to a network authorization method and application thereof, for sending a session ID to the client by means of a third-party server, so that the client uses the session ID to acquire service from the service server.

According to one embodiment of the present disclosure, the network authorization method comprises steps as follow. A client session ID is generated after a client uses a client account to log in; the client session ID is replied to the client; the login session ID is received from a service server after the client transmits a login session ID to the service server; whether the login session ID corresponds with the client session ID is compared; an authorized signal is transmitted to the service server when the login session ID corresponds with the client session ID, so that the service server permits the client to log in.

According to another embodiment of the present disclosure, an instant message server comprises an account receiver, a session generator, a session transmitter, a registration receiver, a session determination generator and a session determination transmitter. The account receiver can receive a client account from a client. The session generator can generate a client session ID after the client account is received. The session transmitter can reply the client session ID to the client. The registration receiver can receive a login session ID from a service server after the client transmits the login session ID to the service server. The session determination generator can generate an authorized signal by means of comparing whether the login session ID corresponds with the client session ID. The session determination transmitter can transmit the authorized signal to the service server, so that the service server determines whether permitting the client to log in according to the authorized signal.

### BRIEF DESCRIPTION OF THE DRAWINGS

The present description will be better understood from the following detailed description read in light of the accompanying drawings, wherein:
Fig. 1 is a flowchart illustrating a network authorization method according to an embodiment of the invention;
Fig. 2 is a schematic diagram showing a network communication system;
Fig. 3 is a flowchart illustrating a way to register the client in the permitted authorization list;
Fig. 4 is a flow chart illustrating a way to edit the permitted authorization list;
Fig. 5 is a flow chart illustrating a way to set the client session ID to be ineffective;
Fig. 6 is a flow chart illustrating a way to determine the state of the client session ID;
Fig. 7 is a block diagram illustrating a network communication system according to another embodiment of the invention;
Fig. 8 illustrates the session generation module of Fig. 7;
Fig. 9 illustrates the session determination module of Fig. 7;
Fig. 10 illustrates the authorization determination module of Fig. 7;
Fig. 11 illustrates the request module of Fig. 7;
Fig. 12 illustrates the editing module of Fig. 7;
Fig. 13 illustrates the selection module of Fig. 7;
Fig. 14 illustrates the state setting module of Fig. 7;
Fig. 15 illustrates the state determination module of Fig. 7;
Fig. 16 illustrates an operation interface of the client according to one embodiment of the invention; and
Fig. 17 illustrates an operation interface of the service server according to one embodiment of the invention.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

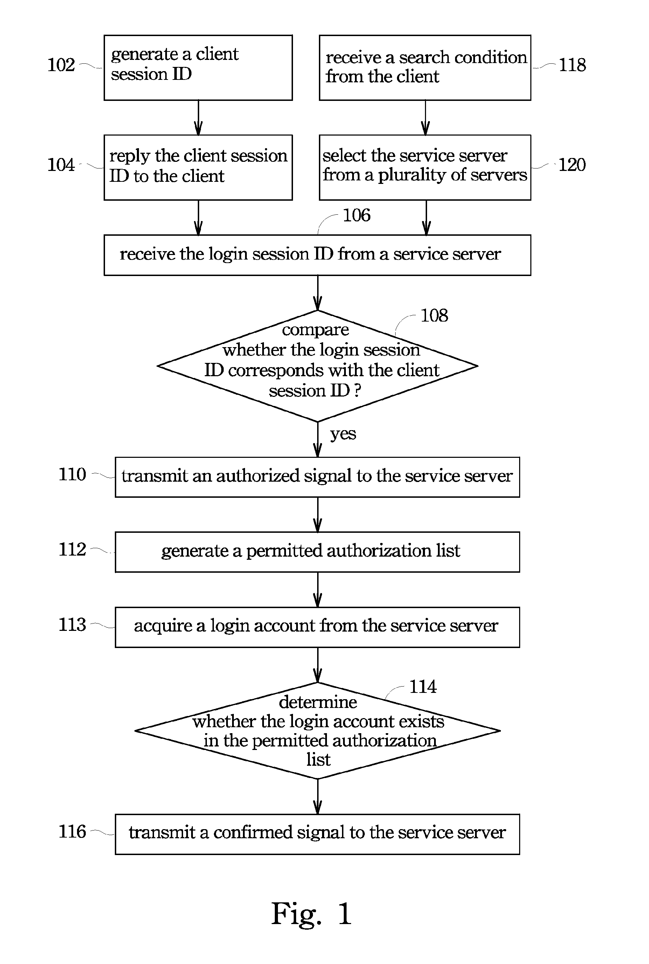

Please refer to Fig. 1. Fig. 1 is a flowchart illustrating a network authorization method according to an embodiment of the invention. The network authorization method can be executed to authorize a client through a third-party server so that a service server can provide service for the client without authorizing the client. The network authorization method is applied in the third-party server. The network authorization method comprises steps as follows.

In step 102, a client session ID is generated after a client uses a client account to log in. In step 104, the client session ID is replied to the client. In step 106, the login session ID is received from a service server after the client transmits a login session ID to the service server. In step 108 it is compared, whether the login session ID corresponds with the client session ID. In step 110, an authorized signal is transmitted to the service server when the login session ID corresponds with the client session ID, so that the service server permits the client to log in.

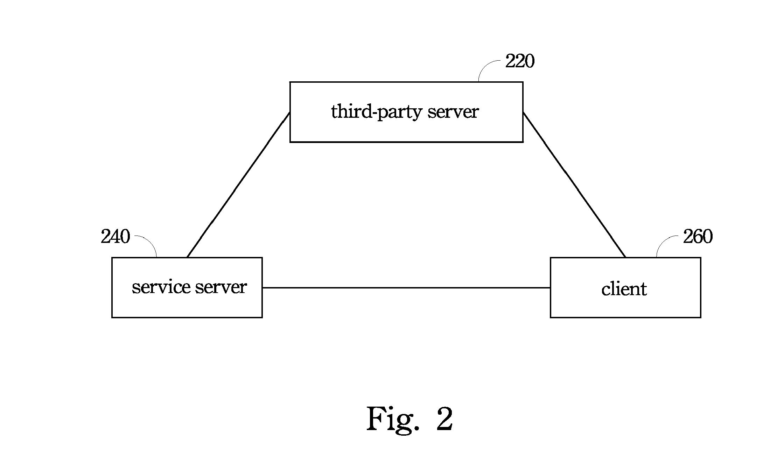

Please refer to Fig. 2. Fig. 2 is a schematic diagram showing a network communication system. The network communication system comprises a third-party server 220, a service server 240 and a client 260. For example, the third-party server 220 for performing the above network authorization method is accomplished. The third-party server 220 can communicate with the client 260 and the service server 240 through Hypertext Transfer Protocol. Please refer to Fig. 1 and Fig. 2. The client 260 transmits the client account thereof to the third-party server 220 before the client 260 logs in the service server 240. The third-party server 220 generates a client session ID in step 102 after receiving the client account transmitted by the client 260 and replying the client session ID to the client in step 104. In practice, the client 260 may transmit the client account with a corresponding secret code and to the third-party server 220; the third-party server 220 generates the client session ID on condition that the secret code and the client account are verified.

The client 260 transmits the login session ID to the service server 240 if the client 260 needed to log in the service server 240 for acquiring service. The service server 240 transmits the login session ID to the third-party server 220 in step 106 after receiving the login session ID. The third-party server 220 compares whether the login session ID corresponds with the client session ID in step 108. Furthermore, the client 260 may transmit the login session ID with a login account or information related to the login session ID to the service server 240. The service server 240 can find the corresponding client session ID based on the login account or the information related to the login session ID, so that the third-party server 220 can compare the client session ID with the login session ID. The third-party server 220 transmits an authorized signal to the service server 240 in step 110 when the login session ID corresponds with the client session ID, so that the service server 240 permits the client 260 to log in.

In practice, an instant message server for performing the network authorization method is accomplished. Moreover, the client session ID and the login session ID are generated by the use of the mechanism of session ID. Thus, the network authorization method can authorize the client through the third-party server without storing user data in the service server capable of providing service.

The network authorization method can be executed to inform the service server whether the client is recorded in a list, whereby the service server may give service to one or more clients based on the list. Accordingly, please refer to Fig. 1. The network authorization method comprises steps as follows.

In step 112, a permitted authorization list is generated based on the name of the service server. In step 113, a login account is acquired from the service server after the client transmits the login account to the service server. In step 114 it is determined, whether the login account exists in the permitted authorization list when the login session ID corresponds with the client session ID. In step 116, a confirmed signal is transmitted to the service server when the login account exists in the permitted authorization list, so that the service server provides service for the client.

Please refer to Fig. 1 and Fig. 2. For example, the service server 240 can determine whether providing service for the client 260 by means of the third-party server 220 after the login session ID that is transmitted to the service server 240 by the client 260 is compared with the client session ID. Furthermore, the third-party server 220 generates the permitted authorization list based on the name of the service server in step 112, wherein the service server 240 permits giving service to accounts in the permitted authorization list. After the service server 240 receives the login account from the client 260, the service server 240 transmits the login account to the third-party server 220 in step 113. The third-party server 220 determines whether the login account exists in the permitted authorization list. When the login account exists in the permitted authorization list, the third-party server 220 transmits a confirmed signal to the service server 240. After receiving the confirmed signal, the service server 240 provides service for the client. Thus, the third-party server can store the permitted authorization list of the service server and determine whether the login account exists in the permitted authorization list, whereby the service server doesn't need to store the permitted authorization list in itself.

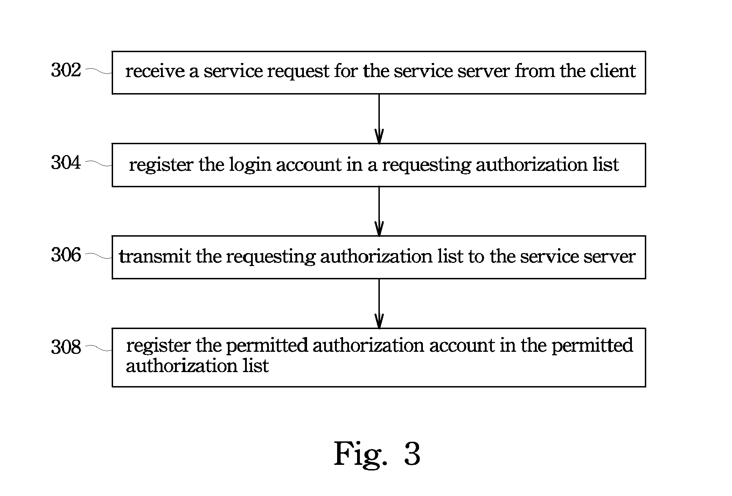

Moreover, the network authorization method may comprise a way to register the client in the permitted authorization list. Accordingly, please refer to Fig. 3. Fig. 3 is a flowchart illustrating a way to register the client in the permitted authorization list. The method for registering the client in the permitted authorization list comprises steps as follows.

In step 302, a service request is received for the service server from the client, wherein the service request comprises the login account. In step 304, the login account is registered in a requesting authorization list after the service request is received. In step 306, the requesting authorization list is transmitted to the service server, so that the service server selects at least one permitted authorization account from the requesting authorization list. In step 308, the permitted authorization account is registered in the permitted authorization list.

Please refer to Fig. 1 and Fig. 2. For example, when the client 260 isn't registered in the permitted authorization list of the service server 240 yet, the client 260 transmits the service request for service server 240 to the third-party server 220 in step 302, the service request comprises the login account and the information to request the service server, such as name. The third-party server 220 registers the login account in the requesting authorization list in step 304 after receiving the service request. The third-party server 220 transmits the requesting authorization list to the service server 240 in step 306, and the service server 240 selects at least one permitted authorization account from the requesting authorization list, where the service server 240 will allow providing service for the permitted authorization account. The service server 240 replies the permitted authorization account to the third-party server 220, and then the third-party server registers the permitted authorization account in the permitted authorization list. Thus, the client can register the permitted authorization list of the service server.

Moreover, the network authorization method can select the service server according to the request of the client. Therefore, please refer to Fig. 1. Before the client transmits the login session ID to the service server, the network authorization method may comprise steps as follow.

In step 118, a search condition is received from the client. In step 120, the service server is selected from a plurality of servers according to the search condition. The search condition received from the client may be service requested by the client, the name of the server requested by the client or the like. Thus, the network authorization method can search the service server according to the request of the client.

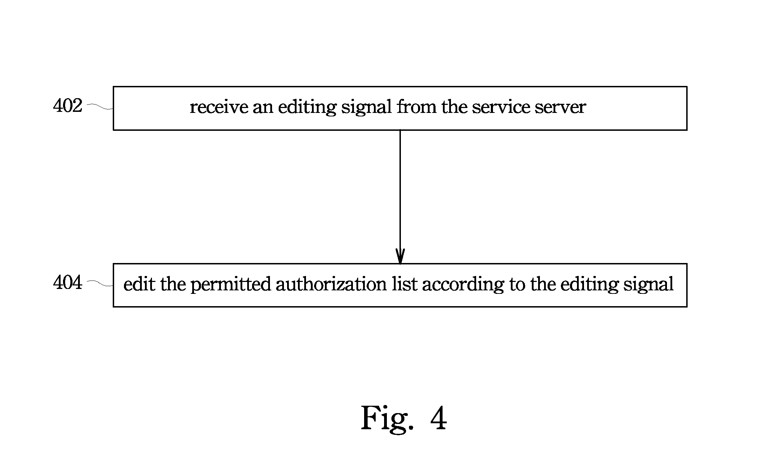

Moreover, the network authorization method can entitle the service server to edit the permitted authorization list thereof. Therefore, please refer to Fig. 4. Fig. 4 is a flow chart illustrating a way to edit the permitted authorization list. The method for editing the permitted authorization list may comprise steps as follow.

In step 402, an editing signal is received from the service server. In step 404, the permitted authorization list is edited according to the editing signal.

The editing signal received from the service server may be a deletion signal, a block signal or the like, and the editing signal may comprise account. For example, the deletion signal is received from the service server in step 402, wherein the deletion signal comprises a user account. Then, the user account is deleted in the permitted authorization in step 404. Thus, the method can edit the permitted authorization list.

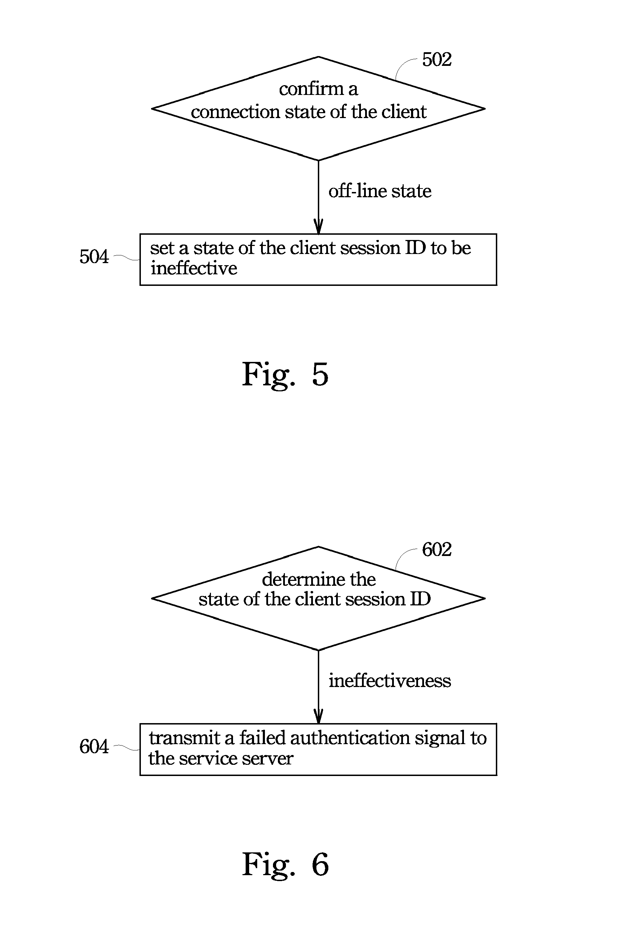

Moreover, the network authorization method can set the client session ID to be ineffective or effective according to the connection state of the client. Therefore, please refer to Fig. 5. Fig. 5 is a flow chart illustrating a way to set the client session ID to be ineffective. The method for setting the client session ID to be ineffective may comprise the steps as follows.

In step 502, a connection state of the client is confirmed. In step 504, a state of the client session ID is set to be ineffective when the connection state of the client is an off-line state.

In practice, a determination signal can be transmitted to the client in step 502, so that the client replies a confirmed signal for confirming the connection state of the client. When the confirmed signal replied by the client isn't received during a period, the connection state of the client is determined as the off-line state, so as to set the state of the client session ID to be ineffective

Therefore, the network authorization method can predetermine the state of the client session ID before comparing whether the login session ID corresponds with the client session ID. Please refer to Fig. 6. Fig. 6 is a flow chart illustrating a way to determine the state of the client session ID. The method for determining the state of the client session ID may comprise steps as follow.

In step 602, the state of the client session ID is determined before it is compared whether the login session ID corresponds with the client session ID. In step 604, a failed authentication signal is transmitted to the service server when the state of the client session ID is ineffective, so that the service server forbids the client to log in after receiving the failed authentication signal.

Thus, the network authorization method can determine the connection state of the client according as the state of the client session ID is ineffective or not, so as to prevent that someone uses the client account and password acquire service from the service server.

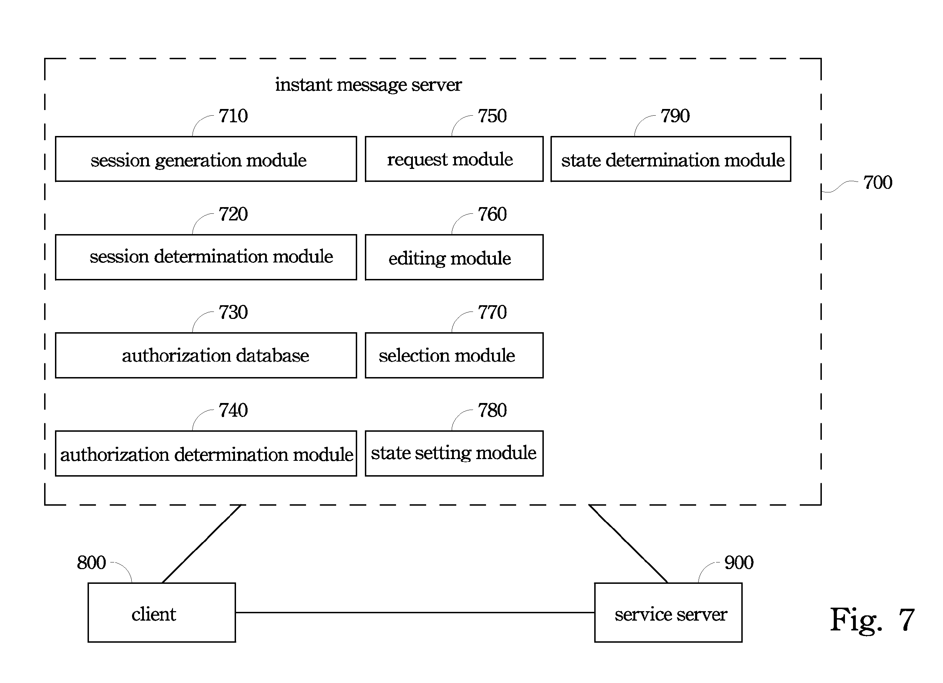

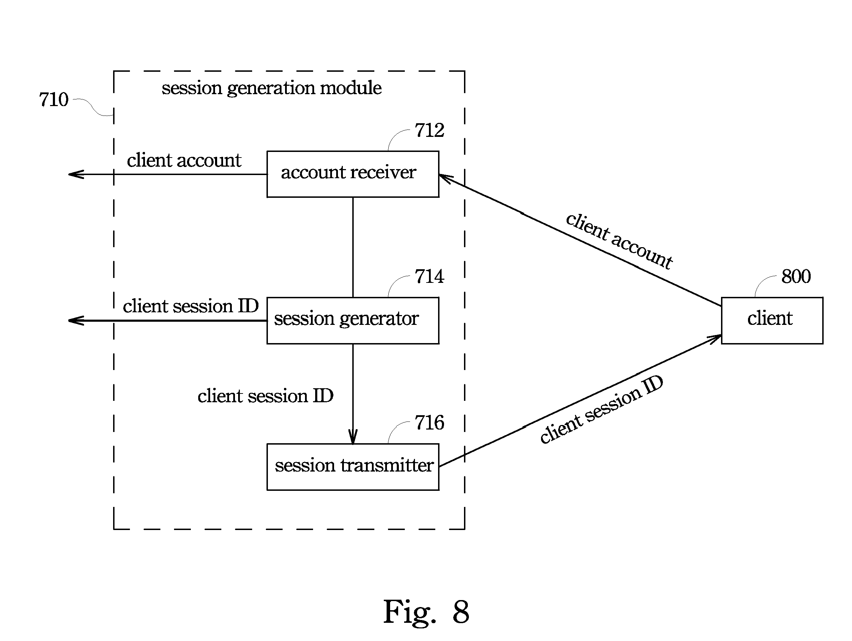

Please refer to Fig. 7. Fig. 7 is a block diagram illustrating a network communication system according to another embodiment of the invention. The network communication system comprises an instant message server 700, a client 800 and a service server 900. The instant message server 700, the client 800 and the service server 900 communicate with each other via a network. Furthermore, the instant message server 700 communicates with the client 800 and the service server 900 through Hypertext Transfer Protocol. After the client 800 transmits a client account, the instant message server 700 generates and replies a session ID to the client 800. Accordingly, the instant message server 700 comprises a session generation module 710. Please refer to Fig. 8. Fig. 8 illustrates the session generation module 710 of Fig. 7. The session generation module 710 comprises an account receiver 712, a session generator 714 and a session transmitter 716. The account receiver 712 can receive a client account from the client 800. The session generator 714 can generate a client session ID after the client account is received. The session transmitter 716 can reply the client session ID to the client 800. In practice, the session generation module 710 may not only receive the client account from the client 800 but also receive a corresponding password. After the client account and the corresponding password are authenticated, the session generation module 710 generates the client session ID.

In other words, after the client 800 transmits the client account thereof to the instant message server 700, the client 800 acquires the client session ID from the instant message server 700. Thus, whenever the client 800 transmits the client account thereof to the instant message server 700, the instant message server 700 generates a new session ID, so as to prevent the same client account repeating to log in.

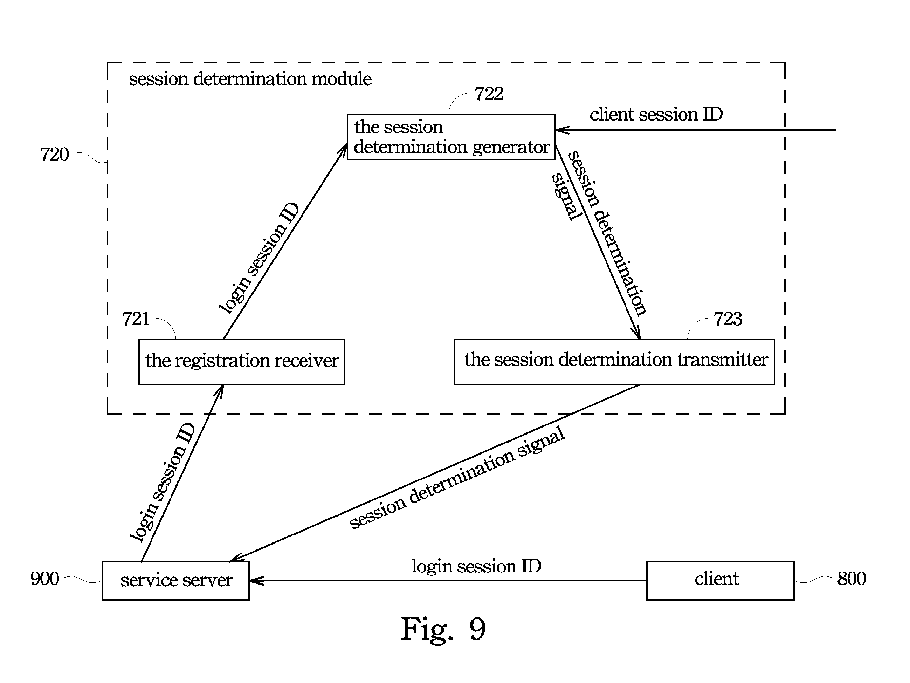

Please refer to Fig. 7. The client 800 transmits a set of login session IDs to the instant message server 700 when attempting to log in the service server 900. The instant message server 700 determines whether permitting the client 800 to log in the service server 900 according to the login session ID and informs the service server 900. Accordingly, the instant message server 700 comprises a session determination module 720. Please refer to Fig. 9. Fig. 9 illustrates the session determination module 720 of Fig. 7. The session determination module 720 comprises a registration receiver 721, a session determination generator 722 and a session determination transmitter 723. Please refer to Fig. 7 and Fig. 9. The registration receiver 721 can receive a login session ID from the service server 900 after the client 800 transmits the login session ID to the service server 900. The session determination generator 722 can generate an authorized signal by means of comparing whether the login session ID corresponds with the client session ID. The session determination transmitter 723 can transmit the authorized signal to the service server 900. In practice, the instant message server may receive information related to the login session ID, such as a login account, from the service server 900; the session determination module 720 finds a corresponding client session ID according to the information and compares the corresponding client session ID with the login session ID.

In the other words, the service server 900 transmits the login session ID to the instant message server 700 after receiving the login session ID from the client 800. The instant message server 700 determines whether permitting the client 800 to log in the service server 900 according to the login session ID, so as to generate and transmit the authorized signal to the service server 900. The service server 900 determines whether permitting the client to log in according to the authorized signal. Thus, the network communication system can utilize the instant message server to determine whether permitting the client to log in the service server, without storing information related to the client in the service server.

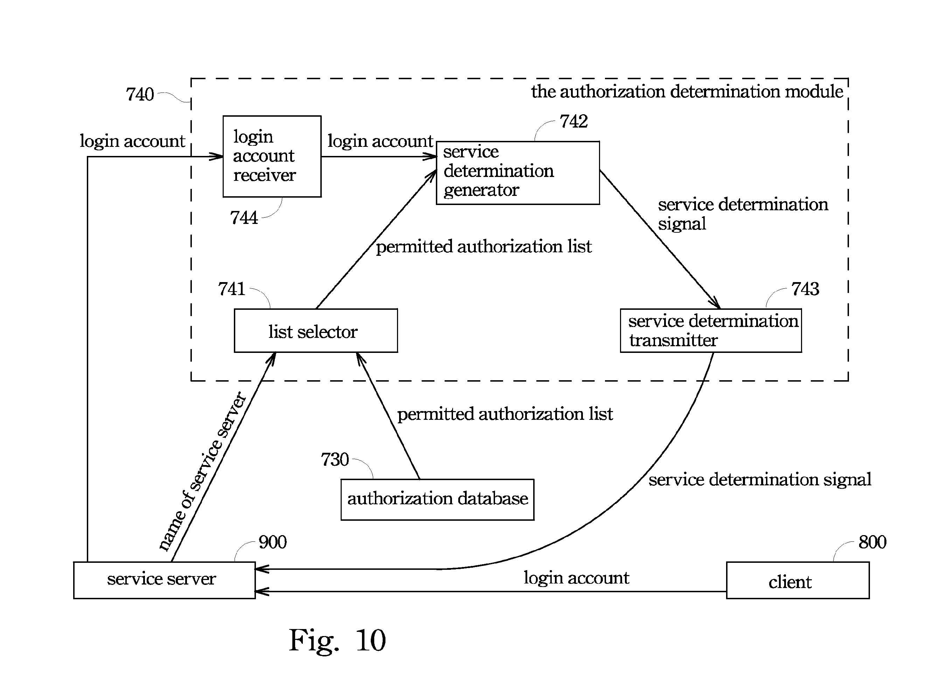

Moreover, please refer to Fig. 7. The instant message server 700 may determine whether the client 800 is permitted to get service form the service server 900. Accordingly, the instant message server 700 comprises an authorization database 730 and an authorization determination module 740. The authorization database 730 can store a plurality of pre-stored permission lists. The authorization determination module 740 can determine whether the client 800 is permitted to get service form the service server 900 based on the authorization database. Please refer to Fig. 10. Fig. 10 illustrates the authorization determination module 740 of Fig. 7. Furthermore, the authorization determination module 740 comprises a list selector 741, a service determination generator 742, a service determination transmitter 743 and a login account receiver 744. The list selector 741 can select a permitted authorization list from the pre-stored permission lists of the authorization database 730 based on a name of the service server 900. The login account receiver 744 can acquire a login account from the service server 900 after the client 800 transmits the login account to the service server 900. The service determination generator 742 can generate a service determination signal according to whether the login account exist in the permitted authorization list when the login session ID corresponds with the client session ID. The service determination transmitter 743 can transmit the service determination signal to the service server 900. Thus, the instant message server 700 can determine whether the client 800 is permitted to get service form the service server 900, without utilizing the resources of the service server 900.

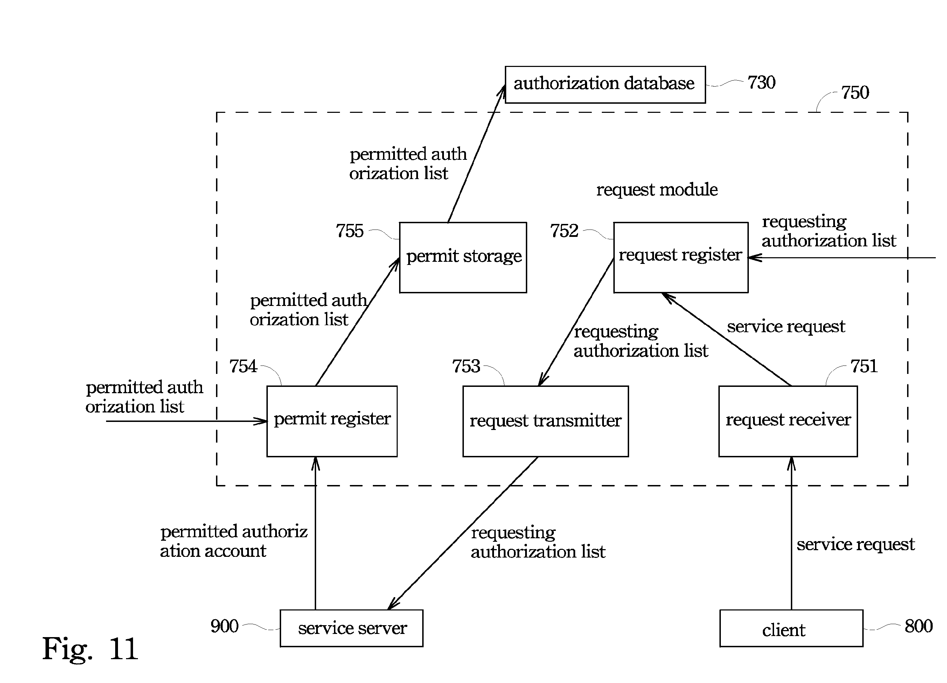

Please refer to Fig. 7. When the client 800 isn't listed in the permitted authorization list, the client 800 can request the service server 900 to list it in the permitted authorization list through the instant message server 700. Accordingly, the instant message server 700 comprises a request module 750. Please refer to Fig. 11. Fig. 11 illustrates the request module 750 of Fig. 7. Furthermore, the request module 750 comprises a request receiver 751, a request register 752, a request transmitter 753 and a permit register 754. The request receiver 751 can receive a service request for the service server 900 from the client 800, wherein the service request may comprise the login account and information of requesting service for the service server 900, such as the name. The request register 752 can register the login account in a requesting authorization list after the service request is received. The request transmitter 753 can transmit the requesting authorization list to the service server 900, so that the service server 900 selects at least one permitted authorization account from the requesting authorization list. The permit register 754 can register the permitted authorization account in the permitted authorization list.

In other words, when the client 800 isn't listed in the permitted authorization list of the service server 900, the client 800 can submit the service request for the service server 900 to the instant message server 700. After receiving the service request for the service server 900, the instant message server 700 registers the login account comprised in the service request and transmits the requesting authorization list to the service server 900. The service server 900 selects the permitted authorization account based on the requesting authorization list and informs the instant message server 700. The instant message server 700 registers the permitted authorization account in the permitted authorization list. Thus, the client 800 can request the service server 900 to add the client account in the permitted authorization list through the instant message server 700.

Moreover, the instant message server 700 can store the permitted authorization list in the authorization database 730 anew after the permitted authorization list is registered. Accordingly, the request module 750 comprises a permit storage 755. The permit storage 755 can store the permitted authorization list in the authorization database according to the name of the service server after the permitted authorization account is registered in the permitted authorization list. Thus, after the permitted authorization list is registered, the instant message server 700 can update the authorization database 730.

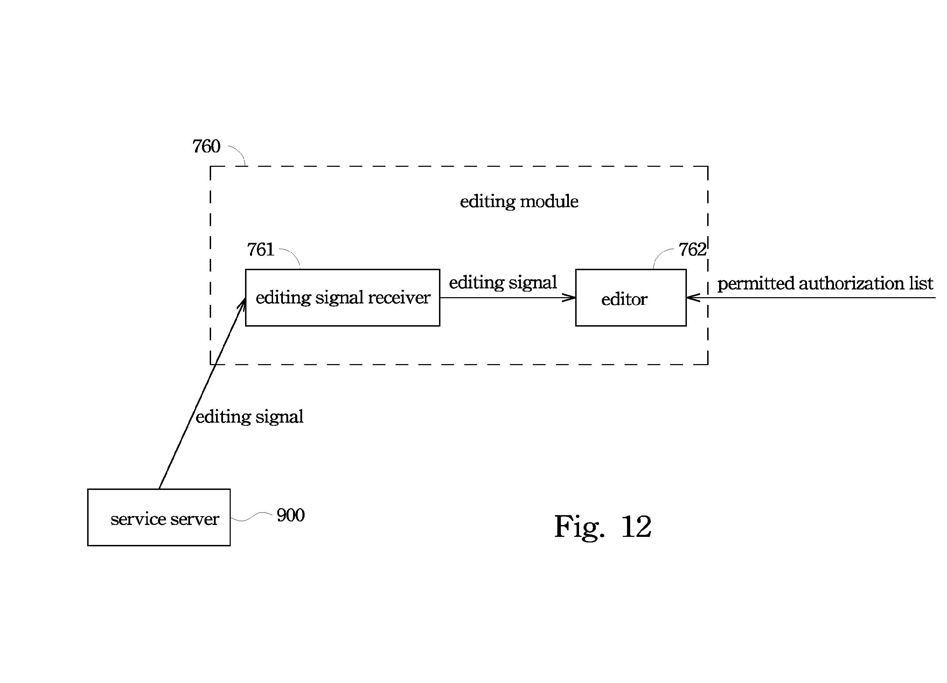

Please refer to Fig. 7. The service server 900 can edit the permitted authorization list stored in the instant message server 700. Accordingly, the instant message server 700 comprises an editing module 760. The editing module 760 can edit the permitted authorization list stored in the service server 900. Please refer to Fig. 12. Fig. 12 illustrates the editing module 760 of Fig. 7. Furthermore, the editing module 760 comprises an editing signal receiver 761 and an editor 762. The editing signal receiver 761 can receive an editing signal from the service server. The editor 762 can edit the permitted authorization list according to the editing signal. Please refer to Fig. 12. Fig. 12 illustrates the editing module 760 of Fig. 7. The editing module 760 comprises an editing signal receiver 761 and an editor 762. The editing signal receiver 761 can receive an editing signal from the service server, wherein the editing signal may comprise a editing command and an account. The editing command may be an additional command, a deletion command, a block command or another command for editing the permitted authorization list. The editor 762 can edit the permitted authorization list according to the editing signal. Furthermore, the editor 762 edits the account in the permitted authorization list according to the editing command. For example, when the editing command is the deletion command, the editor 762 deletes the account from the permitted authorization list. Thus, the service server 900 can edit the permitted authorization list through the instant message server 700.

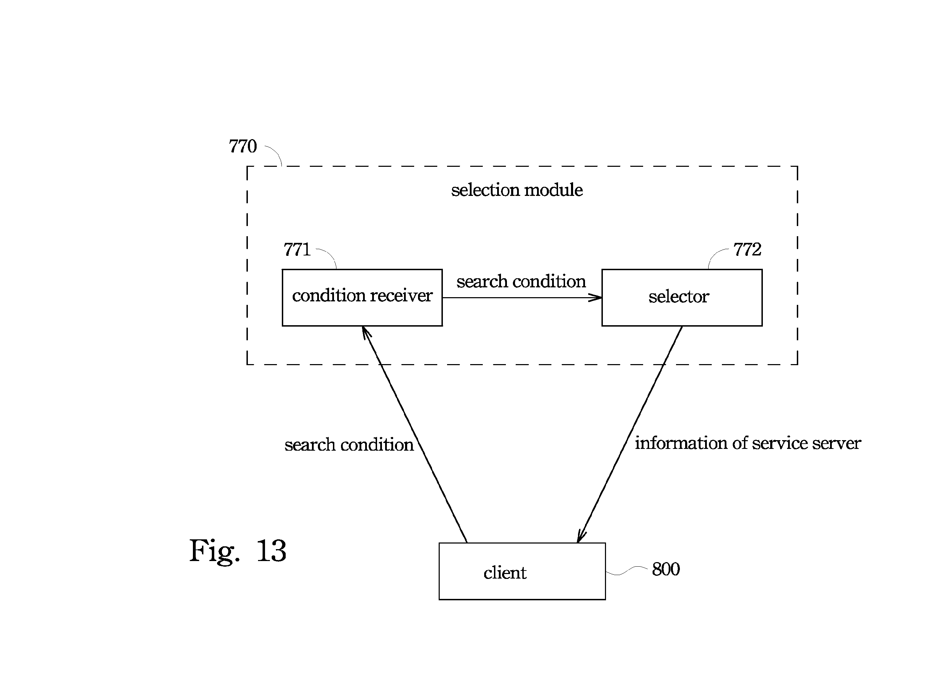

Please refer to Fig. 7. The client 800 may transmit a search condition to the instant message server 700 to select the service server 900. Accordingly, the instant message server 700 comprises a selection module 770. The instant message server 700 selects the service server 900 according to the search condition of the client 800. Please refer to Fig. 13. Fig. 13 illustrates the selection module 770 of Fig. 7. The selection module 770 comprises a condition receiver 771 and a selector 772. The condition receiver 771 can receive a search condition from the client 800. The selector 772 can select the service server 900 from a plurality of servers according to the search condition, so as to transmit information of the service server to the client 800. Thus, the client 800 can select the service server 900 through the instant message server 700 according to its requirement.

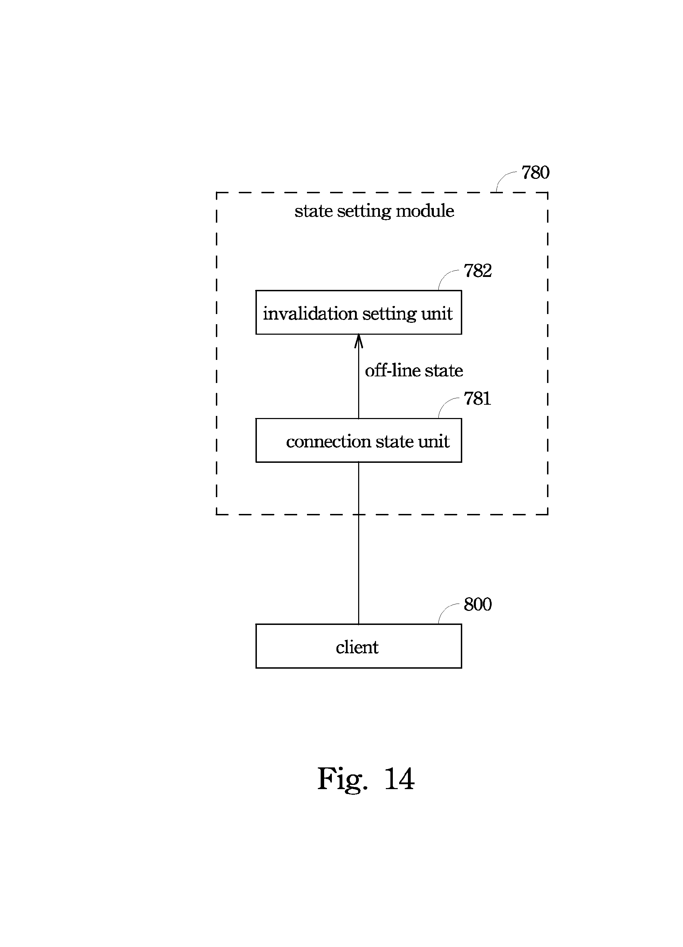

Please refer to Fig. 7. The instant message server 700 may set a state of the client session ID according to a connection state of the client 800. Furthermore, the instant message server 700 set the state of the client session ID to be ineffective when the connection state of the client is an off-line state, so that someone can't use the client account and the client session ID to acquire service from the service server 900. Accordingly, the instant message server 700 comprises a state setting module 780 and a state determination module 790. The state setting module 780 can set the state of the client session ID according to the connection state of the client 800. Please refer to Fig. 14. Fig. 14 illustrates the state setting module 780 of Fig. 7. The state setting module 780 comprises a connection state unit 781 and an invalidation setting unit 782. The connection state unit 781 can confirm the connection state of the client 800. The invalidation setting unit 782 can set the state of the client session ID to be ineffective when the connection state of the client is the off-line state.

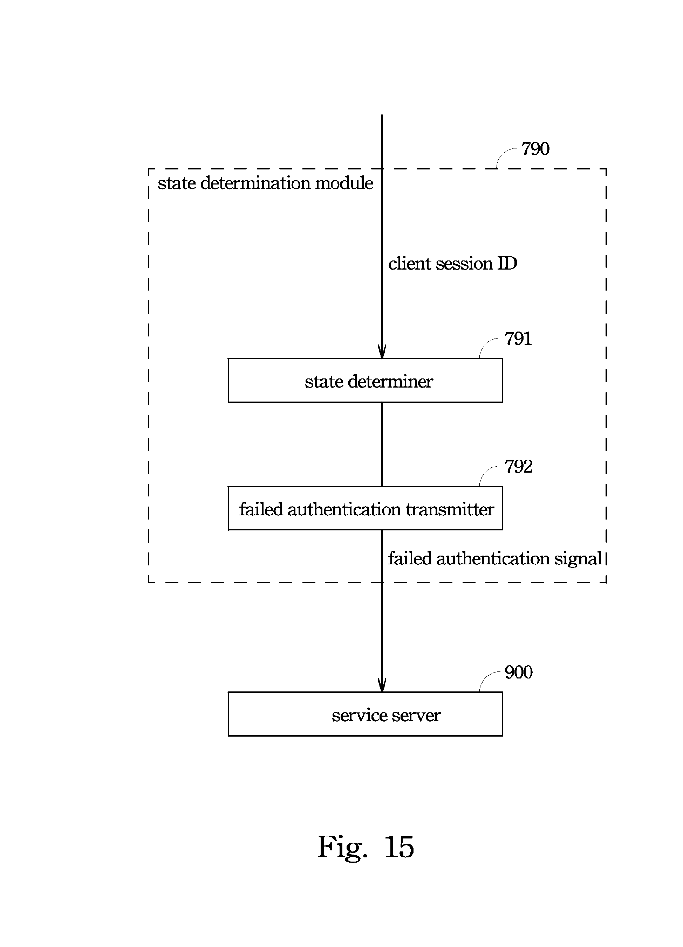

Please refer to Fig. 15. Fig. 15 illustrates the state determination module 790 of Fig. 7. Furthermore, the state determination module 790 comprises a state determiner 791 and a failed authentication transmitter 792. The state determiner 791 can determine the state of the client session ID before it is compared whether the login session ID corresponds with the client session ID. The failed authentication transmitter 792 can transmit a failed authentication signal to the service server when the state of the client session ID is ineffective, so that the service server forbids the client to log in after receiving the failed authentication signal. Thus, the instant message server 700 can determine the connection state of the client 800 according as the state of the client session ID is ineffective or not, so as to prevent someone from using the client account and the password to acquire service from the service server when the connection state of the client is the off-line state.

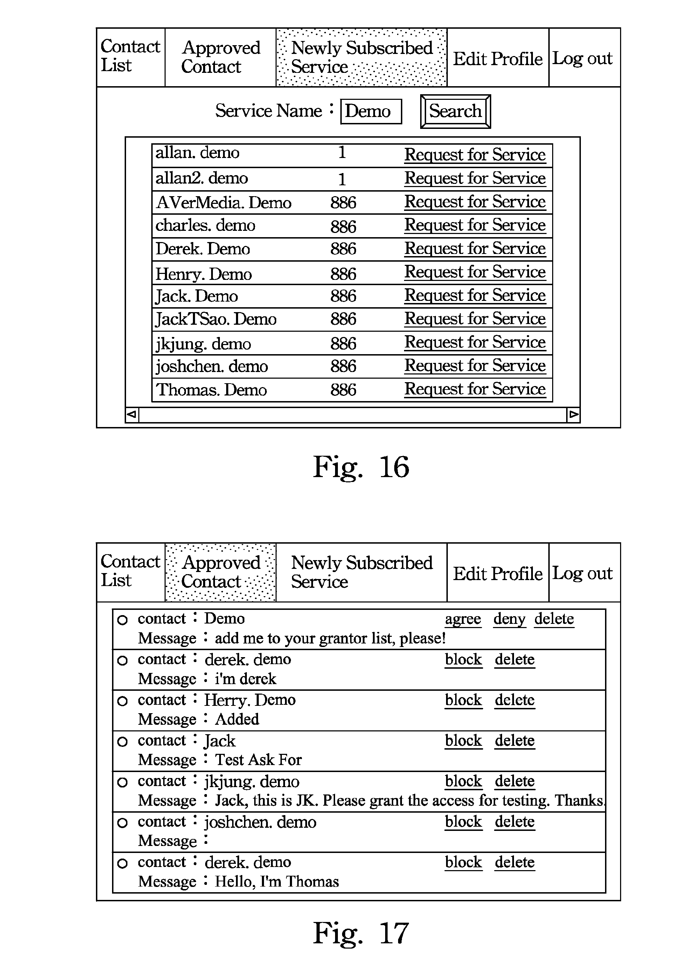

Please refer to Fig. 16. Fig. 16 illustrates an operation interface of the client according to one embodiment of the invention. In practice, the service name DEMO may be inputted through the client, as above-mentioned search condition, for getting the names of servers from the instant message server, where each of the servers may act as the service server. After one "Request for service" is pressed through the client, the client transmits the service request to the instant message server. Therefore, the instant message server adds the login account of the client in the requesting authorization list according to the name of the service server requested by the client.

Please refer to Fig. 17. Fig. 17 illustrates an operation interface of the service server according to one embodiment of the invention. In practice, the service server can display the requesting authorization list and the authenticated list connecting the service server within the same operation interface. In the embodiment, the contact DEMO is an account of requesting authorization in the requesting authorization list. The service server may select whether adding DEMO to the permitted authorization list. Moreover, the service server can edit the other accounts in the permitted authorization list. For example, when "delete" of contact derek demo is pressed, the service server can delete derek demo in the permitted authorization list.

It will be apparent to those skilled in the art that various modifications and variations can be made to the structure of the present invention without departing from the scope or spirit of the invention. In view of the foregoing, it is intended that the present invention covers modifications and variations of this invention provided they fall within the scope of the following claims and their equivalents.

## Claims

1. A network authorization method, comprising:
generating a client session ID after a client uses a client account to log in;
replying the client session ID to the client;
receiving the login session ID from a service server after the client transmits a login session ID to the service server;
comparing whether the login session ID corresponds with the client session ID; and
transmitting an authorized signal to the service server when the login session ID corresponds with the client session ID, so that the service server permits the client to log in.

2. The network authorization method of claim 1, further comprising:
generating a permitted authorization list based on a name of the service server;
acquiring a login account from the service server after the client transmits the login account to the service server;
determining whether the login account exists in the permitted authorization list when the login session ID corresponds with the client session ID; and
transmitting a confirmed signal to the service server when the login account exists in the permitted authorization list, so that the service server provides service for the client.

3. The network authorization method of claim 1, wherein the step of generating the permitted authorization list comprises:
receiving a service request for the service server from the client, wherein the service request comprises the login account;
registering the login account in a requesting authorization list after the service request is received;
transmitting the requesting authorization list to the service server, so that the service server selects at least one permitted authorization account from the requesting authorization list; and
registering the permitted authorization account in the permitted authorization list.

4. The network authorization method of claim 3, further comprising:
receiving a search condition from the client before the client transmits the login session ID to the service server; and
selecting the service server from a plurality of servers according to the search condition.

5. The network authorization method of claim 2, further comprising:
receiving an editing signal from the service server; and
editing the permitted authorization list according to the editing signal.

6. The network authorization method of claim 1, further comprising:
confirming a connection state of the client;
setting a state of the client session ID to be ineffective when the connection state of the client is an off-line state;
determining the state of the client session ID before it is compared whether the login session ID corresponds with the client session ID; and
transmitting a failed authentication signal to the service server when the state of the client session ID is ineffective, so that the service server forbids the client to log in after receiving the failed authentication signal.

7. The network authorization method of claim 1, wherein the network authorization method communicates with the client and the service server through Hypertext Transfer Protocol.

8. An instant message server, comprising:
an account receiver for receiving a client account from a client;
a session generator for generating a client session ID after the client account is received;
a session transmitter for replying the client session ID to the client;
a registration receiver for receiving a login session ID from a service server after the client transmits the login session ID to the service server;
a session determination generator for generating an authorized signal by means of comparing whether the login session ID corresponds with the client session ID; and
a session determination transmitter for transmitting the authorized signal to the service server, so that the service server determines whether permitting the client to log in according to the authorized signal.

9. The instant message server of claim 8, further comprising:
an authorization database for storing a plurality of pre-stored permission lists;
a list selector for selecting a permitted authorization list from the pre-stored permission lists based on a name of the service server;
a login account receiver for acquiring a login account from the service server after the client transmits the login account to the service server;
a service determination generator for generating a service determination signal according to whether the login account exist in the permitted authorization list when the login session ID corresponds with the client session ID; and
a service determination transmitter for transmitting the service determination signal to the service server, so that the service server determines whether providing service to the client according to the service determination signal.

10. The instant message server of claim 9, further comprising:
a request receiver for receiving a service request for the service server from the client, wherein the service request comprises the login account;
a request register for registering the login account in a requesting authorization list after the service request is received;
a request transmitter for transmitting the requesting authorization list to the service server, so that the service server selects at least one permitted authorization account from the requesting authorization list; and
a permit register for registering the permitted authorization account in the permitted authorization list.

11. The instant message server of claim 10, further comprising:
a permit storage for storing the permitted authorization list in the authorization database according to the name of the service server after the permitted authorization account is registered in the permitted authorization list.

12. The instant message server of claim 10, further comprising:
a condition receiver for receiving a search condition from the client; and
a selector for selecting the service server from a plurality of servers according to the search condition.

13. The instant message server of claim 9, further comprising:
an editing signal receiver for receiving an editing signal from the service server; and
an editor for editing the permitted authorization list according to the editing signal.

14. The instant message server of claim 8, further comprising:
a connection state unit for confirming a connection state of the client;
an invalidation setting unit for setting a state of the client session ID to be ineffective when the connection state of the client is an off-line state;
a state determiner for determining the state of the client session ID before it is compared whether the login session ID corresponds with the client session ID; and
a failed authentication transmitter for transmitting a failed authentication signal to the service server when the state of the client session ID is ineffective, so that the service server forbids the client to log in after receiving the failed authentication signal.

15. The instant message server of claim 8 , wherein the instant message server communicates with the client and the service server through Hypertext Transfer Protocol.
